# EUROPÄISCHE PATENTSCHRIFT

(11) **EP 0 476 258 B1**
(45) Veröffentlichungstag und Bekanntmachung des Hinweises auf die Patenterteilung: **05.10.1994**
(21) Anmeldenummer: 91111778.6
(22) Anmeldetag: 15.07.1991
(51) Int. Cl.: A22C 11/10, A22C 11/02

(54) **Verfahren und Vorrichtung zum Herstellen von Würsten**
Method and device for manufacturing sausages
Procédé et dispositif pour la fabrication de saucisses

(30) Priorität: 06.09.1990 DE 4028343
(43) Veröffentlichungstag der Anmeldung: 25.03.1992
(73) Patentinhaber: Albert Handtmann Maschinenfabrik GmbH & Co. KG, D-88400 Biberach (DE)
(72) Erfinder: Staudenrausch, Georg, W-7950 Biberach/Riss (DE)
(74) Vertreter: Grünecker, Kinkeldey, Stockmair & Schwanhäusser Anwaltssozietät

(56) Entgegenhaltungen:
- EP-A- 0 392 083
- WO-A-88/07819
- CH-A- 524 314
- DE-A- 2 605 745
- DE-B- 1 069 487
- FR-A- 2 214 413
- FR-A- 2 620 902
- US-A- 3 191 222
- US-A- 3 694 853
- US-A- 4 539 796

## Beschreibung

Die Erfindung betrifft ein Verfahren zum Herstellen von Würsten, indem aus einem Vorratsbehälter einer Füllmaschine kommendes Wurstbrät in eine von der Hüllenraupe abgezogene Wursthülle gefüllt wird und ein Abteilen in Portionen durch Abdrehen einer Abdrehvorrichtung erfolgt. Die Erfindung betrifft auch eine Vorrichtung zur Durchführung eines solchen Verfahrens.

Ein solches Verfahren bzw. eine solche Vorrichtung ist aus der DE-A-26 05 745 bekannt. Dabei muß beim Abteilen durch Abdrehen verhältnismäßig viel Wurstbrät an der Abteilstelle verdrängt werden, so daß sich dabei stark deformierte Wurstenden ergeben. Außerdem muß dabei ein verhältnismäßig großes Drehmoment aufgebracht werden, so daß eine Gefahr der Beschädigung der Wursthülle im Bereich deren Enden gegeben ist. Diese Nachteile stellen sich bei Würsten jeden Kalibers, insbesondere aber bei größerkalibrigen Würsten, ein.

Der Erfindung liegt das technische Problem zugrunde, ein solches Verfahren so weiterzubilden, daß ohne die Gefahr der Beschädigung der Wursthülle die Wurstenden beim Abdrehen praktisch nicht deformiert werden.

Zur Lösung dieses technischen Problems sieht die Erfindung bei einem solchen Verfahren vor, daß der Abstand zwischen zwei Portionen jeweils vergrößert wird, indem die voraus laufende Portion zusammen mit der Wursthülle während des Abteilens mit einer relativ zur Ausstoßgeschwindigkeit des Wurstbräts höheren Geschwindigkeit vorwärts gezogen wird.

Es wird also zwischen zwei Portionen, d.h., während des Abteilens, von der auf der Tülle befindlichen Wursthüllenraupe ein Stück abgezogen, so daß zum Zeitpunkt des Abdrehens zwischen den zwei Portionen ein etwas längeres Stück einer nicht oder zumindest wesentlich weniger gefüllten Wursthülle vorhanden ist.

Soweit das Ausstoßen des Wurstbräts pulsierend in Portionen erfolgt, kann gemäß der Erfindung das Vorwärtsziehen der Wursthülle mit einer im wesentlichen konstanten Geschwindigkeit erfolgen, die etwa der maximalen Füllgutausstoßgeschwindigkeit entspricht. Soweit aber das Ausstoßen des Wurstbrätes mit etwa konstanter Geschwindigkeit, also bei konstantem Füllgutstrom, erfolgt, kann gemäß der Erfindung die Geschwindigkeit, mit welcher die Wursthülle vorwärtsgezogen wird, während des Abdrehens erhöht werden.

Auf diese Art und weise lassen sich ebenfalls Portionen erzielen, wobei auch hier der Abstand zwischen zwei Portionen jeweils vergrößert wird. Obwohl dabei das Ausstoßen des Wurstbrätes mit etwa konstanter Geschwindigkeit erfolgt, wird ein Abdrehen zwischen zwei Portionen dennoch möglich, weil der Abstand zwischen zwei Portionen jeweils vergrößert wird.

Die Erfindung betrifft außerdem eine Vorrichtung zum Durchführen der vorstehend geschilderten Verfahren, bestehend aus mindestens einer Füllmaschine und dieser nachgeschalteten Abdrehvorrichtung nach Anspruch 4.

Weitere Merkmale und Vorteile der Erfindung ergeben sich aus den Unteransprüchen und aus der nachfolgenden Beschreibung und der Zeichnung, in welcher ein Ausführungsbeispiel der Vorrichtung schematisch dargestellt ist.

Dabei zeigen:
- Figur 1: eine Seitenansicht der Vorrichtung im Schema,
- Figur 2: ein erstes Zeit-Geschwindigkeitsdiagramm und
- Figur 3: ein zweites Zeit-Geschwindigkeitsdiagramm.

Im gezeichneten Ausführungsbeispiel ist eine in der üblichen Art und Weise zusammengebaute Füll- und Portioniermaschine 1 (strichpunktiert gezeichnet) vorhanden. Die Portioniermaschine könnte aber auch für sich arbeiten.

An die Füll- und Portioniermaschine 1 ist in der üblichen Art und Weise die insgesamt mit 2 bezeichnete Abdrehvorrichtung angeschlossen, die aus einem Abdrehgetriebe 3 zum Antrieb der Tülle 4 und dem Bremsringgetriebe 5 besteht. An die Abdrehvorrichtung 2 schließt sich in einem gewissen Abstand eine insgesamt mit 6 bezeichnete Transportvorrichtung an. Sie besteht in bekannter Weise aus zwei im Abstand zueinander angeordneten endlosen Transportbändern 8, die parallel zueinander angeordnet und durch einen Motor 7 so angetrieben sind, daß die im Abstand gegenüberliegenden Fördertrume 9 das vordere Ende einer Portion zwischen sich erfassen und in Pfeilrichtung vorwärtsbewegen.

Der Antrieb 7 für die beiden Transportbänder 8 wird durch eine elektronische Steuerung 11 so gesteuert, daß er die Transportbänder 8 kontinuierlich antreibt.

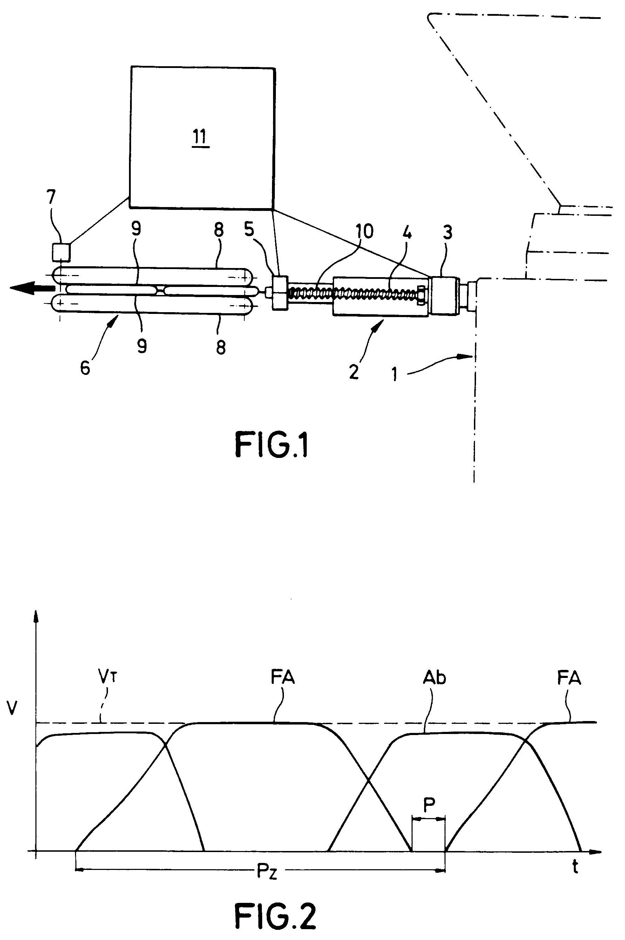

Die Abdrehvorrichtung 2 kann mit einem separaten Antrieb (drehzahlregelbar) oder über den Abdrehantrieb der Füllmaschine 1 angetrieben werden. Der Verfahrensablauf ergibt sich aus dem Geschwindigkeitszeitdiagramm gemäß Figur 2 wie folgt:

Das Einfüllen der Portionen erfolgt im Beispiel nach Fig.2 in bekannter Weise absatzweise - Die Kurve des Füllgutausstoßes ist mit FA bezeichnet. Zwischen aufeinanderfolgenden Füllgutausstoßvorgängen ist eine Pause P eingeschaltet. Die Geschwindigkeitslinie VT der Transportbänder 8 ist gestrichelt eingezeichnet, es handelt sich um eine im wesentlichen konstante Geschwindigkeit, die in etwa mit der Füllgutausstoßgeschwindigkeit übereinstimt.

Mit PZ ist ein Portionszyklus bezeichnet.

Das jeweilige Abdrehen erfolgt gemäß dem Verlauf der Addrehkurve Ab, deren Maximum etwa mit dem Anfang der Pause P zusammenfällt, so daß der wesentliche Teil des Addrehens, nämlich der Beginn, in die Pause fällt. Daß die Addrehkurve sich noch in den Anfang des nächsten Füllgutausstoßvorganges hineinzieht, ist erfahrungsgemäß für das Abdrehen unschädlich.

Die Pausenzeit kann sehr kurz gewählt werden, beispielsweise bis zu 60 ms.

Während der Vorgang eines Füllgutausstoßes FA mit dem Maximum an Geschwindigkeit läuft, stimmt diese Geschwindigkeit etwa mit der Transportgeschwindigkeit VT überein.

Sobald aber die Ausstoßgeschwindigkeit abfällt, ergibt sich zwischen der Transportgeschwindigkeit VT und der Ausstoßgeschwindigkeit FA eine deutliche Differenz. Dies bedeutet, daß die Ausstoßmenge sehr rasch abnimmt, die Portion zusammen mit der Wursthülle jedoch mit der unverändert großen Geschwindigkeit VT weiterbefördert wird, so daß dabei von der auf der Tülle befindlichen Wursthüllenraupe 10 ein Stück abgezogen wird, das nur noch wenig gefüllt wird, nämlich nur noch durch den Nachlauf des Wurstbrätes. Beim Abdrehen wird also nur wenig Brät verdrängt, so daß das Wurstende sich auf keinen Fall nach außen deformiert und auch das Abdrehen sehr schonend und mit verhältnismäßig geringer Kraft erfolgen kann.

Durch das Abziehen eines Stücks der Wursthüllenraupe 10 wird ein größerer Abstand zwischen zwei Portionen geschaffen, d.h. der Abdrehbereich ist größer als beim üblichen Abdrehen.

Es hat sich gezeigt, daß das geschilderte Verfahren auch durchgeführt werden kann, wenn zwischen zwei Ausstoßvorgängen keine Pause eingeschaltet wird, sondern der Füllgutstrom an den Portionsgrenzen nur pulsierend abgesenkt wird, d.h. daß in diesem Bereich die Aussstoßgeschwindigkeit deutlich verringert wird. Dies genügt, um mit Rücksicht auf die dabei bewirkte Geschwindigkeitsdifferenz gegenüber der Transportgeschwindigkeit VT ein Abziehen eines Stückes der Wursthüllenraupe 10 in der oben geschilderten Art und Weise zu bewirken.

Zu erwähnen ist außerdem, daß selbstverständlich auch während der Einfüllpausen von der Raupe 10 zusätzlich Wursthülle abgezogen wird.

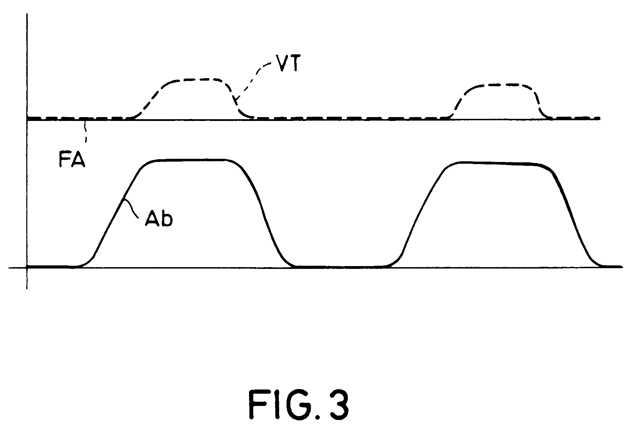

Gemäß dem Ausführungsbeispiel nach Figur 3 wird das Füllgut, d.h. das Wurstbrät, mit konstanter Geschwindigkeit FA ausgestoßen, es ergibt sich somit ein konstanter Füllgutstrom.

Die Transportgeschwindigkeit VT stimmt außerhalb der jeweiligen Bereiche des Abdrehens mit der Füllgutgeschwindigkeit FA im wesentlichen überein.

In den jeweiligen Bereichen des Abdrehens (Abdrehgeschwindigkeitskurve Ab) wird jedoch die Transportgeschwindigkeit VT deutlich erhöht. Somit ist im Addrehbereich die Wursthülle nicht mehr straff gefüllt, so daß an dieser Stelle das Abdrehen ermöglicht wird. So ergibt sich ebenfalls ein Portionieren, wobei auch hier zwischen den Portionen der Abstand jeweils vergrößert wird.

Von Vorteil ist außerdem, daß durch die Transportbänder 8 die Portionen während dem Füllgutausstoß um jeweils die gleiche Strecke weitertransportiert werden, nachdem in dieser Zeit die Wursthülle 10 von der Tülle 4 abgezogen wird. Dadurch ergeben sich stets gleiche Wurstlängen, die Abdrehung erfolgt immer nach der gleichen angezogenen Wursthüllenlänge.

Die elektronische Steuerung 11 steuert auch den drehzahlregelbaren Elektromotor 7, d.h. den Antrieb für die Transportbänder 8, so daß der Motor 7 in Abhängigkeit mit dem Bremsringgetriebe 5 und dem Abdrehgetriebe 3 sowie dem Portionierantrieb gesteuert werden kann.

Selbstverständlich kann die Erfindung auch zum Einfüllen anderer pastöser Massen als Wurstbrät angewandt werden.

## Patentansprüche

1. Verfahren zum Herstellen von Würsten, indem aus einem Vorratsbehälter einer Füllmaschine (1) kommendes Wurstbrät in eine von einer Hüllenraupe (10) abgezogene Wursthülle gefüllt wird und ein Abteilen in Portionen durch Abdrehen einer Abdrehvorrichtung (2) erfolgt,
**dadurch gekennzeichnet,**
daß der Abstand zwischen zwei Portionen jeweils vergrößert wird, indem die vorauslaufende Portion zusammen mit der Wursthülle während des Abteilens mit einer relativ zur Ausstoßgeschwindigkeit des Wurstbräts höheren Geschwindigkeit vorwärts gezogen wird.

2. Verfahren nach Anspruch 1, wobei das Ausstoßen des Wurstbräts pulsierend erfolgt,
**dadurch gekennzeichnet,**
daß das Vorwärtsziehen der Wursthülle mit einer im wesentlichen konstanten Geschwindigkeit (V_{T}) erfolgt, die etwa der maximalen Füllgutausstoßgeschwindigkeit (F_{A}) entspricht.

3. Verfahren nach Anspruch 1 oder 2, wobei das Ausstoßen des Wurstbrätes mit etwa konstanter Geschwindigkeit erfolgt,
**dadurch gekennzeichnet,**
daß die Geschwindigkeit (V_{T}), mit welcher die Wursthülle vorwärtsgezogen wird, während des Abdrehens erhöht wird.

4. Vorrichtung zur Durchführung des Verfahrens nach Anspruch 1, 2 oder 3, mit einer Füllmaschine (1) einer dieser nachgeschalteten Abdrehvorrichtung die aus einem Abdrehgetriebe (3) und einem Bremsringgetriebe (5) besteht und mit einer der Abdrehvorrichtung (2) in Förderrichtung gesehen nachgeordneten, die jeweils vordere Portion erfassenden, im wesentlich kontinuerlich angetriebenen Transportvorrichtung (6),
**dadurch gekennzeichnet,**
daß die Vorrichtung eine elektronische Steuerung (11) aufweist, welche den Antrieb der Füllmaschine (1) und des Abdrehgetriebes (3) und des Bremsringgetriebes (5) der Abdrehvorrichtung (2) in Abgleichung mit dem Antriebsmotor (7) der Transportvorrichtung (6) derart regelt, daß während des Abteilens ein Geschwindigkeitsunterschied zwischen Wurstbrät und Wursthülle entsteht.

5. Vorrichtung nach Anspruch 4,
**dadurch gekennzeichnet,**
daß die Transportvorrichtung (6) durch einen deren Geschwindigkeit intermittierend erhöhenden Motor (7) angetrieben ist.

6. Vorrichtung nach Anspruch 5,
**dadurch gekennzeichnet,**
daß die Transportvorrichtung (6) durch einen drehzahlregelbaren Elektromotor angetrieben ist.

## Claims

1. Method for producing sausages, in which sausage meat from a storage container of a filling machine (1) is stuffed into a sausage casing drawn from a chain of casings (10) and a division into portions takes place by the twisting-off of a twist-off device (2),
**characterised** in that the distance between two portions is increased in each case during the dividing up process by drawing forward the leading portion together with the sausage casing at a speed which is higher than the speed of sausage meat expulsion.

2. Method according to claim 1, in which the expulsion of the sausage meat is effected with pulsations,
**characterised**
in that the drawing forward of the sausage casing takes place at an essentially constant speed (V_{T}) which approximately corresponds to the maximum filling material expulsion rate (F_{A}).

3. Method according to claim 1 or 2, in which the expulsion of the sausage meat takes place at an approximately constant speed,
**characterised** in that the speed (V_{T}) at which the sausage casing is drawn forward is increased during the twisting off process.

4. Device for carrying out the method according to claim 1, 2 or 3, with a filling machine (1), a twist-off device arranged in series with this which consists of a twist-off drive (3) and a braking mechanism (5) and with an essentially continuously driven transport device (6), which in each case picks up the front portion and which, when viewed in the conveying direction, is arranged after the twist-off device (2),
**characterised**
in that the device has an electronic control (11) which controls the drive of the filling machine (1) and the twist-off drive (3) and the brake ring drive (5) of the twist-off device (2) in adjustment with the drive motor (7) of the transport device (6) in such a way that during the division there is produced a speed differential between sausage meat and sausage casing.

5. Device according to claim 4,
**characterised**
in that the transport device (6) is driven by a motor (7) which intermittently increases the speed of the transport device (6).

6. Device according to claim 5,
**characterised**
in that the transport device (6) is driven by an electric motor whose speed can be controlled.

## Revendications

1. Procédé de fabrication de saucisses dans lequel de la chair à saucisses venant d'un réservoir d'une remplisseuse (1) est mise dans un boyau retiré d'une chenille à boyau (10) et une division en portions est produite par un dispositif à ligaturer (2), caractérisé par le fait qu'on augmente la distance entre deux portions en tirant en avant la portion avant avec le boyau pendant la division à une vitesse supérieure à la vitesse d'expulsion de la chair à saucisses.

2. Procédé selon la revendication 1, dans lequel l'expulsion de la chair à saucisses est faite de manière pulsatoire, caractérisé par le fait que le tirage en avant du boyau à saucisses est fait à une vitesse sensiblement constante (V_{T}) qui correspond à peu près à la vitesse maximale d'expulsion de la matière de remplissage (F_{A}).

3. Procédé selon l'une des revendications 1 et 2, dans lequel l'expulsion de la chair à saucisses est faite à vitesse à peu près constante, caractérisé par le fait que pendant la ligature, on augmente la vitesse (V_{T}) à laquelle le boyau à saucisses est tiré en avant.

4. Dispositif pour la mise en oeuvre du procédé selon l'une des revendications 1, 2 et 3, comportant une remplisseuse (1), un dispositif à ligaturer placé en aval de celle-ci et constitué d'un mécanisme à ligaturer (3) et d'un mécanisme à anneau de freinage (5), et un dispositif de transport (6) placé en aval, dans la direction de transport, du dispositif à ligaturer (2), actionné de façon sensiblement continue et saisissant la portion avant, caractérisé par le fait qu'il présente une commande électronique (11) qui règle l'entraînement de la remplisseuse (1) et du mécanisme à ligaturer (3) et du mécanisme à anneau de freinage (5) du dispositif à ligaturer (2) en équilibre avec le moteur (7) du dispositif de transport (6) de façon telle que pendant la division se crée une différence de vitesse entre la chair à saucisses et le boyau.

5. Dispositif selon la revendication 4, caractérisé par le fait que le dispositif de transport (6) est actionné par un moteur (7) qui augmente sa vitesse par intermittence.

6. Dispositif selon la revendication 5, caractérisé par le fait que le dispositif de transport (6) est actionné par un moteur électrique à vitesse réglable.
